# EUROPÄISCHE PATENTSCHRIFT

(11) **EP 1 410 479 B1**
(45) Veröffentlichungstag und Bekanntmachung des Hinweises auf die Patenterteilung: **03.05.2006**
(21) Anmeldenummer: 02758233.7
(22) Anmeldetag: 14.06.2002
(51) Int. Cl.: H02J 1/14, B60R 16/02

(54) **VERFAHREN UND VORRICHTUNG ZUM STEUERN DER AUFLADUNG EINER KRAFTFAHRZEUGBATTERIE**
METHOD AND DEVICE FOR CONTROLLING THE CHARGING OF A MOTOR VEHICLE BATTERY
PROCEDE ET DISPOSITIF DE COMMANDE DE LA RECHARGE D'UNE BATTERIE DE VEHICULE AUTOMOBILE

(30) Priorität: 21.07.2001 DE 10135621
(43) Veröffentlichungstag der Anmeldung: 21.04.2004
(73) Patentinhaber: Bayerische Motoren Werke Aktiengesellschaft, 80809 München (DE)
(72) Erfinder: PFAB, Xavier, 84424 Isen (DE); LANG, Thomas, Dr., 82282 Aufkirchen (DE)
(86) Internationale Anmeldenummer: PCT/EP2002/006532
(87) Internationale Veröffentlichungsnummer: WO 2003/012952

(56) Entgegenhaltungen:
- DE-A- 4 422 329
- DE-C- 3 936 638
- GB-A- 2 348 057
- US-A- 5 416 702

## Beschreibung

Elektrische Bordnetze von Kraftfahrzeugen weisen üblicherweise eine Fahrzeugbatterie und einen dazu parallel geschalteten Generator auf, der bei laufendem Motor ununterbrochen elektrische Energie erzeugt. In der Regel reicht die Generatorleistung zur Versorgung aller an das Bordnetz angeschlossenen Verbraucher aus. Die Fahrzeugbatterie dient daher meist nur als Energiespeicher für den Startvorgang und der kurzzeitigen Versorgung der elektrischen Verbraucher, zum Beispiel bei einem kurzzeitigen Motorstillstand. Insbesondere nach einem Kaltstart sollte die Fahrzeugbatterie zweckmäßigerweise solange von dem Generator mit elektrischer Energie versorgt werden bis sie vollständig aufgeladen ist. Auch danach kann sie noch bei geringem Ladestrom weiter geladen werden, um den Ladezustand zu erhalten.

DE 44 22 329 A1 beschreibt ein Verfahren zum Betreiben eines elektrischen Kraftfahrzeug-Bordnetzes. Das Verfahren berücksichtigt für die Verringerung der Versorgung von Verbrauchern mit elektrischer Energie die momentane Kapazität der Bordbatterie unter Berücksichtigung ihrer Historie und den Wirkungsgrad der elektrischen Energieerzeugung, gegeben durch die momentanen Wirkungsgrade von Antriebmaschine und Generator.

Bei Fahrzeugen mit Verbrennungsmotoren wird der Fahrzeuginnenraum üblicherweise unter Verwendung von Motorabwärme beheizt. In der Warmlaufphase nach einem Kaltstart geben Verbrennungsmotoren jedoch nur wenig Wärme ab. Dies gilt in besonderem Masse für Verbrennungsmotoren mit hohem Wirkungsgrad, beispielsweise moderne Dieselmotoren.

Es ist daher bereits vorgeschlagen worden, während der Warmlaufphase eine elektrische Zusatzheizung zu betreiben, die von dem elektrischen Bordnetz mit Energie versorgt wird. DE 197 28 589 C1 beschreibt ein System mit einer solchen Zusatzheizung. Um den Generator gut auszulasten, wird ein sogenanntes Dynamofeld Signal (DF-Signal), welches einen Erregerstrom des Generators steuert und ein Mass für die Auslastung des Generators ist, abgegriffen und die Generatorauslastung durch Anpassen des elektrischen Widerstandes der Zusatzheizung auf einen vorgegebenen Wert geregelt. Die Fahrzeugbatterie ist während des Betriebs der Zusatzheizung permanent an dem Generator angeschlossen.

Nachteilig an dieser Vorgehensweise ist, daß das Energieangebot für die Zusatzheizung vom Ladezustand der Fahrzeugbatterie und vom Energiebedarf der elektrischen Verbraucher am Bordnetz abhängig ist und daher eine Unterversorgung und/oder Heizleistungsschwankungen auftreten können, die von Fahrzeuginsassen wahrgenommen werden. Dies gilt insbesondere für Systeme mit Fahrzeugbatterien großer Speicherkapazität, die mit sehr hohen Ladeströmen, zum Beispiel Strömen von mehr als 150 A, aufgeladen werden können. Um in solchen Fällen eine Versorgung der Zusatzheizung mit elektrischer Energie zu gewährleisten, sind in der Praxis Generatoren mit besonders großer Generator-Nennleistung eingesetzt worden. Solche Generatoren sind jedoch schwer, teuer in der Herstellung und benötigen viel Raum.

Die Erfindung ist in Patentansprüche 1 und 6 definiert.

Aufgabe der vorliegenden Erfindung ist es, ein Verfahren und eine Vorrichtung anzugeben, die eine gute Auslastung des Generators ermöglichen, einer Entladung der Fahrzeugbatterie vorbeugen und dennoch, selbst bei normaler Generator-Nennleistung und in Warmlaufphasen, eine möglichst gleichmäßige Versorgung eines Zusatzverbrauchers mit elektrischer Energie ermöglichen. Der Zusatzverbraucher ist insbesondere eine elektrische Zusatzheizung, kann jedoch auch ein anderer Verbraucher sein, der zusätzlich zu sonstigen elektrischen Verbrauchern vorgesehen ist und der nicht permanent und/oder nicht vorrangig mit elektrischer Energie versorgt werden muß. Der Generator versorgt den Zusatzverbraucher lediglich dann mit elektrischer Energie, wenn der Leistungsbedarf des Bordnetzes gedeckt ist.

Ein wesentlicher Gedanke der vorliegenden Erfindung liegt darin, einen Ladestrom, mit dem der Generator die Fahrzeugbatterie auflädt, derart einzustellen, daß der Ladestrom kleiner als der maximal mögliche Ladestrom bei gleicher Generatorleistung und bei gleichem Leistungsbedarf des Bordnetzes ist. Diese Einstellung wird dann vorgenommen, wenn festgestellt wird, daß der Ladestrom größer oder gleich einem Grenzwert ist, wenn ein Leistungsbedarf des Zusatzverbrauchers besteht und wenn die Generatorleistung eine Versorgung des Zusatzverbrauchers erlaubt. Vorzugsweise wird der Ladestrom so eingestellt, daß er den Grenzwert nicht unterschreitet. Hierdurch wird eine Aufladung der Fahrzeugbatterie im Bedarfsfall, insbesondere bei niedrigem Ladezustand der Fahrzeugbatterie, gewährleistet.

Eine Möglichkeit, den Ladestrom einzustellen, besteht darin, in einem Strompfad von dem Generator zu der Fahrzeugbatterie ein Stellglied vorzusehen und dieses so zu betreiben, daß der Ladestrom auf einen kleineren Wert als maximal möglich eingestellt wird.

Bevorzugtermaßen wird der Ladestrom indirekt dadurch eingestellt, daß ein elektrischer Widerstand des Zusatzverbrauchers eingestellt wird. DE 197 28 589 C1 beschreibt zwei geeignete Varianten, die auch kombiniert werden können. Gemäß der ersten Variante weist der Zusatzverbraucher, in diesem Fall die Zusatzheizung, eine Mehrzahl parallel geschalteter Heizelemente auf, die einzeln ein- und ausgeschaltet werden können. Gemäß der zweiten Variante weist die Zusatzheizung einen Leistungstransistor auf, zum Beispiel einen MOSFET (Metalloxidhalbleiter-Feldeffekttransistor), dessen Heizwiderstand durch Ansteuerung eines Steuereingangs des Transistors einstellbar ist. Im Gegensatz zu der Lehre der DE 197 28 589 C1 dient die Einstellung des Widerstandes jedoch der Einstellung des Ladestroms in der beschriebenen Weise. Damit kann einerseits eine ausreichende Aufladung der Fahrzeugbatterie erreicht werden und andererseits, aufgrund der Reduzierung des Ladestroms im Vergleich zu dem maximal möglichen Ladestrom, eine gleichmäßigere Versorgung des Zusatzverbrauchers erreicht werden.

Weiterhin kann ein Generator mit kleinerer Nennleistung verwendet werden, als wenn eine Leistungsreserve für den Fall großer Batterieladeströme vorgehalten werden muß. Insgesamt ist der Generator daher besser ausgelastet.

Bei einer Weiterbildung wird die Generatorauslastung noch erhöht, indem der Ladestrom erhöht wird, wenn der Leistungsbedarf des Zusatzverbrauchers zu einem bestimmten Grad gedeckt ist, insbesondere voll gedeckt ist.

Bei einer Ausgestaltung der Erfindung wird der Ladestrom, zumindest unter den oben genannten Bedingungen, auf den Grenzwert geregelt. Das heißt, es wird versucht, daß der Ladestrom weder kleiner noch größer als der Grenzwert ist. Beispielsweise aufgrund von Totzeiten und/oder Trägheiten im Regelkreis kann der Ladestrom dabei jedoch vom Grenzwert abweichen. Zum Beispiel erfolgt die Einstellung des Ladestroms wie oben im Zusammenhang mit DE 197 28 589 C1 beschrieben durch Einstellung des elektrischen Widerstandes des Zusatzverbrauchers.

Der Ladestrom kann jedoch auch auf einen höheren Wert geregelt werden, wenn und/oder solange die Generatorleistung hierfür ausreicht und außerdem auch die Versorgung des Zusatzverbrauchers erlaubt.

Bevorzugtermaßen wird der Zusatzverbraucher nicht oder nicht mehr von dem Generator mit elektrischer Energie versorgt, wenn der Ladestrom kleiner als der Grenzwert ist und/oder wenn der Ladestrom nicht nur kurzzeitig oder nicht nur aufgrund einer Regelung des Ladestroms unter den Grenzwert fällt.

Bei einer Weiterbildung wird ein Ladezustand der Fahrzeugbatterie detektiert und es wird zugelassen, daß der Ladestrom unter den Grenzwert fällt und/oder daß die Fahrzeugbatterie entladen wird, wenn ein Versorgungsbedarf des Zusatzverbrauchers besteht und wenn der Ladezustand ein hohes Niveau erreicht, insbesondere wenn ein Maß für den Ladezustand größer oder zumindest gleich einem bestimmten Minimalwert ist. In diesem Fall, wenn der Ladezustand nicht kritisch ist, kann also der Zusatzverbraucher dennoch von dem Generator versorgt werden, obwohl die Generatorleistung u. U. nicht ausreicht, gleichzeitig die Fahrzeugbatterie mit einem Ladestrom aufzuladen, der größer als der Grenzwert ist. Daher kann eine noch bessere Deckung des Versorgungsbedarfs des Zusatzverbrauchers erreicht werden und/oder ein Generator mit einer kleineren Nennleistung eingesetzt werden.

Vorzugsweise wird der Grenzwert vorgegeben. Insbesondere ist der Grenzwert von zumindest einer Variablen abhängig, etwa der Fahrzeugbatterie-Temperatur und/oder dem Batterieladezustand. Zum Beispiel wird bei einer größeren in der Batterie gespeicherten Energiemenge ein niedrigerer Grenzwert vorgegeben. Auch ist es möglich, den Grenzwert abhängig von der momentanen Generatorleistung zu verändern, wobei bevorzugtermaßen ein bestimmter minimaler Grenzwert nicht unterschritten wird. Ist jedoch die Batterie voll aufgeladen, kann auch dieser minimale Grenzwert unterschritten werden.

Es wird vorgeschlagen, ein Bedarfssignal auszuwerten, das den elektrischen Versorgungsbedarf des Zusatzverbrauchers wiedergibt, und die hier beschriebene Steuerung der Aufladung der Fahrzeugbatterie abhängig von dem Auswertungsergebnis vorzunehmen. Durch das Bedarfssignal wird eine Versorgung des Zusatzverbrauchers mit elektrischer Energie angefordert.

Insbesondere wird es dem Ladestrom erlaubt, den größt möglichen Wert anzunehmen, den die momentane Generatorleistung ermöglicht, falls kein Versorgungsbedarf des Zusatzverbrauchers besteht. Alternativ oder zusätzlich wird der Grenzwert des Ladestroms angepaßt, wenn sich der Versorgungsbedarf ändert.

Unter Generator wird jegliche Art von Vorrichtungen verstanden, die elektrische Energie generiert. Der Generator kann z. B. ein konventioneller, durch einen Motor angetriebener elektromagnetischer Generator oder eine Brennstoffzelle sein. Auch im Fall einer Brennstoffzelle kann ein Lastzustand oder Auslastungsgrad des Generators festgestellt werden, der wie das DF-Signal eines konventionellen Generators ausgewertet und/oder verwendet werden kann.

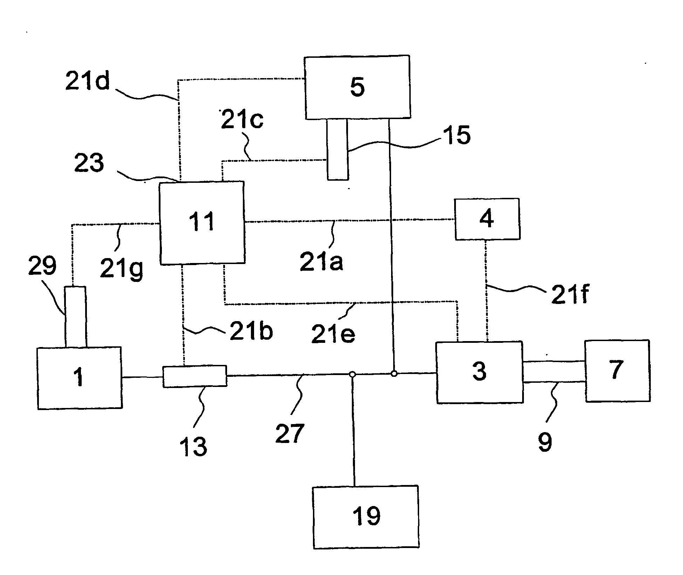

Ausführungsbeispiele der Erfindung werden nun anhand der beigefügten Zeichnungen beschrieben. Die einzige Figur der Zeichnung zeigt:

Eine schematischer Darstellung eines elektrischen Bordsystems eines Kraftfahrzeugs mit einem daran angeschlossenen Zusatzverbraucher.

In der Figur ist ein Generator 3 dargestellt, der über eine Kraftübertragungseinrichtung 9 von einem Fahrzeugmotor 7, zum Beispiel einem Dieselmotor, antreibbar ist. Ein Dynamofeldsignal (DF-Signal), welches einen Erregerstrom des Generators 3 steuert und aus dem die Generatorauslastung ableitbar ist, wird an einer DF-Signaleinheit 4 abgegriffen und über eine Signalleitung 21a einer Steuereinheit 11 zugeführt. Die DF-Signaleinheit 4 ist über eine Signalleitung 21f mit dem Generator 3 verbunden. Weitere Details bezüglich der Art und Auswertung des DF-Signals sind der DE 197 28 589 C1 entnehmbar.

Weiterhin wird die Drehzahl des Generators 3 ermittelt, zum Beispiel direkt an dem Generator 3 abgegriffen oder indirekt aus der Drehzahl des Fahrzeugmotors 7 ermittelt, und über eine Signalleitung 21e der Steuereinheit 11 zugeführt.

Die Figur stellt durch ununterbrochene Linien einen Teil des elektrischen Bordnetzes eines Kraftfahrzeugs dar. Nicht nähere dargestellte Verbraucher 19, wie Glühkerzen des Fahrzeugmotors 7 und elektronische Steuereinheiten zur Steuerung von Motorfunktionen oder anderen Funktionen des Kraftfahrzeugs, werden von dem Generator 3, und unter Umständen von einer dazu parallel geschalteten Fahrzeugbatterie 1, mit elektrischer Energie versorgt. Zumindest ein Teil der Verbraucher 19 erfüllt für das Fahren des Kraftfahrzeugs und/oder für die Sicherheit essentielle Funktionen und ist daher vorrangig zu versorgen. Der Generator 3 übernimmt bei laufendem Fahrzeugmotor 7 in der Regel allein die Versorgung der Verbraucher 19 und lädt gleichzeitig die Fahrzeugbatterie 1 auf.

Ein Zusatzverbraucher 5, hier eine Zusatzheizung, ist elektrisch mit dem Generator 3 verbunden. Sie dient der Beheizung eines Fahrzeuginnenraums, wenn nicht ausreichend Motorabwärme zur Beheizung zur Verfügung steht.

In einem Strompfad 27, über den der Generator 3 mit der Fahrzeugbatterie 1 verbunden ist, befindet sich ein Meßglied 13 zur Messung des Ladestroms, mit dem der Generator 3 die Fahrzeugbatterie 1 auflädt. Das Meßglied 13 ist über eine Signalleitung 21b mit der Steuereinheit 11 verbunden. Weiterhin ist ein Stellglied 15 vorgesehen, das über eine Signalleitung 21 c mit der Steuereinheit 11 verbunden ist und das der Einstellung des Ladestroms dient. Das Stellglied 15 stellt beispielsweise den elektrischen Widerstand des Zusatzverbrauchers 5 ein.

Alternativ kann das Stellglied zum Beispiel in dem Strompfad 27 vorgesehen sein und insbesondere geeignet sein, den Strom unmittelbar einzustellen, etwa durch wiederholte kurzzeitige Unterbrechung des Stromflusses, so daß der mittlere Strom über ein Zeitintervall von beispielsweise einer Sekunde den gewünschten Wert hat. Eine andere Möglichkeit, den Ladestrom unmittelbar einzustellen, ist die Verwendung eines einstellbaren Gleichspannungswandlers. Eine Eingangsseite des Wandlers, an der eine Eingangsspannung anliegt, ist mit dem Generator verbunden. Eine Ausgangsseite des Wandlers, an der eine einstellbare Ausgangsspannung anliegt, ist mit der Fahrzeubatterie verbunden. Insbesondere durch Einstellen der Ausgangsspannung auf einen niedrigeren Wert als die Eingangsspannung kann der Ladestrom auf einen kleineren Wert eingestellt werden als bei gleicher Generatorleistung möglich ist.

Die Steuereinheit 11 weist einen Anschluß 23 auf, an dem eine Signalleitung 21d angeschlossen ist, die die Steuereinheit 11 mit dem Zusatzverbraucher 5 verbindet. Der Zusatzverbraucher 5 signalisiert über die Signalleitung 21d, wie groß sein Versorgungsbedarf ist und/oder ob ein Versorgungsbedarf besteht.

Mit der Fahrzeugbatterie 1 ist ein Ladezustanddetektor 29 verbunden, der den Ladezustand der Fahrzeugbatterie 1 detektiert, z. B. indirekt durch Messung der Batteriespannung. Der Ladezustanddetektor 29 ist über eine Signalleitung 21g mit der Steuereinheit 11 verbunden. Die Steuereinheit 11 steuert die Aufladung der Fahrzeugbatterie 1 abhängig von einem Signal das sie von dem Ladezustanddetektor 29 erhält.

Es wird nun ein Algorithmus beschrieben, nach dem die Steuereinheit, insbesondere die Steuereinheit 11 gemäß der Figur, die Aufladung der Fahrzeugbatterie steuern kann. Bevorzugtermaßen weist die Steuereinheit hierzu einen mikroelektronischen Prozessor auf, der die einzelnen Schritte des Algorithmus wiederholt abarbeitet.

Zu Beginn wird der Grenzwert des Ladestroms, gegebenenfalls abhängig von Variablen wie der elektrischen Spannung der Fahrzeugbatterie, die ein Maß für den Ladezustand ist, festgelegt. Anschließend werden ein aktueller Meßwert des Ladestroms und das DF-Signal eingelesen. Besteht kein Versorgungsbedarf des Zusatzverbrauchers, oder ist zumindest eine der im folgenden beschriebenen Bedingungen nicht erfüllt, werden diese Schritte in kurzen Zeitabständen wiederholt. Besteht ein Versorgungsbedarf wird überprüft, ob das DF-Signal einer kleineren Auslastung des Generators als ein Auslastungsgrenzwert, zum Beispiel 95 Prozent, entspricht. Ist dies der Fall wird eine Regelung des Ladestrom zugelassen, oder bei bereits aktivierter Regelung nicht deaktiviert. Andernfalls wird die Regelung nicht zugelassen oder deaktiviert, wenn die Auslastung des Generator gleich dem Auslastungsgrenzwert oder größer ist.

Anschließend wird geprüft, ob der Ladestrom größer als der Grenzwert des Ladestroms ist. Ist dies der Fall wird die Regelung aktiviert bzw. die Regelung bleibt aktiv. Andernfalls wird die Regelung deaktiviert bzw. bleibt inaktiv.

Bei möglichen Varianten des Algorithmus werden die bisher beschriebenen Schritte in anderer Reihenfolge ausgeführt. Es wird jedoch sichergestellt, daß bei aktivierter Ladestromregelung die zuvor genannten Bedingungen erfüllt sind.

Bei aktivierter Regelung wird der Zusatzverbraucher von dem Generator mit elektrischer Energie versorgt. Der Ladestrom wird auf den Grenzwert geregelt.

Während der Regelung werden die oben genannten Schritte wiederholt durchgeführt. Dabei wird es dem Ladestrom erlaubt, kurzzeitig oder aufgrund von Trägheiten und/oder Totzeiten der Regelung unter den Grenzwert zu fallen. Wird jedoch eine anhaltende Unterschreitung des Grenzwertes festgestellt oder ist eine der anderen Bedingungen nicht mehr erfüllt, werden die Regelung deaktiviert und der Zusatzverbraucher nicht mehr von dem Generator versorgt.

Bei einer Weiterbildung wird während der Regelung überprüft, ob der Versorgungsbedarf des Zusatzverbrauchers voll gedeckt ist. Wenn dies der Fall ist, wird der Ladestrom so eingestellt, daß er größer als der momentane Grenzwert ist. Dies geschieht vorzugsweise so, daß der Zusatzverbraucher weiterhin voll versorgt wird oder der Versorgungsbedarf mindestens zu einem bestimmten Prozentsatz gedeckt wird. Die Erhöhung des Ladestroms kann insbesondere durch eine entsprechende Erhöhung und/oder laufende Anpassung des Grenzwertes des Ladestroms erreicht werden.

Vorzugsweise wird während der Regelung weiterhin der Ladezustand der Fahrzeugbatterie ausgewertet und bei hohem Ladezustand, insbesondere wie oben beschrieben, zugelassen, daß der Ladestrom unter den Grenzwert fällt. Eine Möglichkeit ist, die Regelung zu beenden, eine andere den Grenzwert zu erniedrigen.

Neben den bereits genannten Vorteilen der Erfindung wird auch die Lebensdauer der Fahrzeugbatterie verlängert, da der Ladestrom während der Regelung auf niedrigere Werte eingestellt wird. Damit können hohe Ladeströme, die zu einer Schädigung der Fahrzeugbatterie führen, vermieden werden. Optional kann der Ladestrom mit der erfindungsgemäßen Vorrichtung auch dann auf einen niedrigeren Wert (als bei derselben Generatorleistung möglich) eingestellt werden, d. h. begrenzt werden, wenn der Zusatzverbraucher keinen Versorgungsbedarf hat.

## Patentansprüche

1. Verfahren zum Steuern der Aufladung einer Fahrzeugbatterie (1), wobei
- die Fahrzeugbatterie (1) mit einem Generator (3) verbunden ist,
- der Generator (3) ein elektrisches Bordnetz (19) eines Kraftfahrzeugs und einen Zusatzverbraucher (5) mit elektrischer Energie versorgt und
- der Generator (3) den Zusatzverbraucher (5) lediglich dann mit elektrischer Energie versorgt, wenn der Leistungsbedarf des Bordnetzes (19) gedeckt ist,
**dadurch gekennzeichnet,**
**daß** die Versorgung des Zusatzverbrauchers (5) und die Aufladung der Fahrzeugbatterie (1) folgendermaßen gesteuert werden:
- wenn der Leistungsbedarf des Zusatzverbrauchers (5) nicht vollständig gedeckt ist,
- wenn festgestellt wird, daß ein Ladestrom, der von dem Generator (3) in die Fahrzeugbatterie (1) fließt, größer als ein Grenzwert ist, und
- wenn die Generatorleistung zusätzlich die Versorgung des Zusatzverbrauchers (5) erlaubt,
wird der Zusatzverbraucher (5) von dem Generator (3) mit Energie versorgt und wird der Ladestrom so eingestellt, daß er kleiner als der maximal mögliche Ladestrom bei gleicher Generatorleistung und bei gleichem Leistungsbedarf des Bordnetzes (19) ist.

2. Verfahren nach Anspruch 1,
wobei der Zusatzverbraucher (5) nicht von dem Generator (3) mit elektrischer Energie versorgt wird, wenn der Ladestrom kleiner als der Grenzwert ist.

3. Verfahren nach Anspruch 1 oder 2,
wobei der Ladestrom auf den Grenzwert geregelt wird, wenn der Zusatzverbraucher (5) von dem Generator (3) mit Energie versorgt wird.

4. Verfahren nach einem der Ansprüche 1 bis 3,
wobei der Grenzwert des Ladestroms abhängig von zumindest einer Variablen verändert wird, insbesondere abhängig von der Fahrzeugbatterie-Temperatur und/oder von dem Batterieladezustand.

5. Verfahren nach einem der Ansprüche 1 bis 4,
wobei ein Ladezustand der Fahrzeugbatterie (1) detektiert wird und wobei zugelassen wird, daß der Ladestrom unter den Grenzwert fällt und/oder daß die Fahrzeugbatterie (1) entladen wird, wenn ein Versorgungsbedarf des Zusatzverbrauchers (5) besteht und wenn der Ladezustand ein hohes Niveau erreicht, insbesondere wenn ein Maß für den Ladezustand größer oder zumindest gleich einem bestimmten Minimalwert ist.

6. Vorrichtung zum Steuern der Aufladung einer Fahrzeugbatterie (1), mit
- einer Stelleinrichtung (15) zur Einstellung eines Ladestroms, mit dem ein Generator (3) die Fahrzeugbatterie (1) auflädt,
- einer Detektionseinrichtung (13) zur Detektion, ob der Ladestrom einen Grenzwert überschreitet, und
- einer Steuereinrichtung (11), die mit der Detektionseinrichtung (13) und der Stelleinrichtung (15) verbunden ist und die einen Anschluß (23) zum Empfangen eines Bedarfssignals aufweist, welches einen elektrischen Versorgungsbedarf eines an dem Generator (3) angeschlossenen Zusatzverbrauchers (5) signalisiert, **dadurch gekennzeichnet,**
**daß** bei einem Versorgungsbedarf der Zusatzheizung der Ladestrom von der Stelleinrichtung (15) so einstellbar ist, daß er kleiner als der maximal mögliche Ladestrom bei gleicher Generatorleistung und bei gleichem Leistungsbedarf sonstiger an dem Generator (3) angeschlossener Verbraucher (19) ist.

7. Vorrichtung nach Anspruch 6, mit
- einer Detektionseinrichtung (29) zur Detektion des Ladezustandes der Fahrzeugbatterie (1), die mit der Fahrzeugbatterie (1) verbunden ist und die ferner mit der Steuereinrichtung (11) verbunden ist,
wobei die Steuereinrichtung (11) derart ausgestaltet ist, daß sie die Steuerung der Aufladung der Fahrzeugbatterie (1) abhängig von einem Detektionssignal der Detektionseinrichtung (29) vornimmt.

## Revendications

1. Procédé pour commander la recharge d'une batterie de véhicule (1), selon lequel
- la batterie de véhicule (1) est reliée à un générateur (3),
- le générateur (3) alimente en énergie électrique un réseau de bord électrique (19) d'un véhicule automobile et un consommateur supplémentaire (5), et
- le générateur (3) alimente le consommateur supplémentaire (5) en énergie électrique uniquement lorsque les besoins en puissance du réseau de bord (19) sont satisfaits,
**caractérisé en ce que**
l'alimentation du consommateur supplémentaire (5) et la recharge de la batterie de véhicule (1) sont commandées de la façon suivante :
- si les besoins en puissance du consommateur supplémentaire (5) ne sont pas entièrement satisfaits,
- si on constate qu'un courant de charge circulant depuis le générateur (3) vers la batterie du véhicule (1) est supérieur à une valeur limite, et
- si la puissance du générateur permet en plus l'alimentation du consommateur supplémentaire (5),
- le consommateur supplémentaire (5) est alimenté en énergie par le générateur (3) et le courant de charge est réglé de manière à être inférieur au courant de charge maximal possible pour une puissance identique du générateur et pour des besoins en puissance identiques du réseau de bord (19).

2. Procédé selon la revendication 1, qui y est le consommateur supplémentaire (5) n'est pas alimenté en énergie électrique par le générateur (3) lorsque le courant de charge est inférieur à la valeur limite.

3. Procédé selon la revendication 1 ou 2, qui y est le courant de charge est régulé sur la valeur limite lorsque le consommateur supplémentaire (5) est alimenté en énergie par le générateur (3).

4. Procédé selon l'une quelconque des revendications 1 à 3,
selon lequel
la valeur limite du courant de charge est modifiée en fonction d'au moins une variable, en particulier en fonction de la température de la batterie du véhicule et/ou de l'état de charge de la batterie.

5. Procédé selon l'une quelconque des revendications 1 à 4,
selon lequel
l'état de charge de la batterie du véhicule (1) est détecté, et on permet au courant de charge de tomber en dessous de la valeur limite et/ou à la batterie du véhicule (1) de se décharger si le consommateur supplémentaire (5) manifeste des besoins en alimentation et si l'état de charge a atteint un niveau élevé, en particulier si une donnée de mesure pour l'état de charge est supérieure ou au moins égale à une certaine valeur minimale.

6. Dispositif pour la commande de la recharge d'une batterie de véhicule (1), avec un dispositif de réglage (15) pour le réglage d'un courant de charge avec lequel un générateur (3) recharge la batterie du véhicule (1),
un dispositif de détection (13) pour détecter si le courant de charge dépasse une valeur limite, et
un dispositif de commande (11) relié au dispositif de détection (13) et au dispositif de réglage (15) et qui présente une connexion (23) pour la réception d'un signal de besoin indiquant un besoin en alimentation électrique d'un consommateur supplémentaire (5) relié au générateur (3),
**caractérisé en ce que**
si le chauffage supplémentaire manifeste des besoins en alimentation, le courant de charge peut être réglé par le dispositif de réglage (15) de manière à être plus faible que le courant de charge maximal possible pour une puissance identique du générateur et pour des besoins en puissance identiques d'autres consommateurs (19) reliés au générateur (3).

7. Dispositif selon la revendication 6,
avec un dispositif de détection (29) pour détecter l'état de charge de la batterie du véhicule (1), 1 relié à la batterie de véhicule (1) et en outre au dispositif de commande (11),
**caractérisé en ce que**
le dispositif de commande (11) est conçu pour effectuer la commande de la recharge de la batterie du véhicule (1) en fonction d'un signal de détection du dispositif de détection (29).

## Claims

1. A method for controlling the charging of a vehicle battery (1), wherein
- the vehicle battery (1) is connected to a generator (3),
- the generator (3) supplies an electric on-board power supply (19) of a motor vehicle and an additional consuming device (5) with electric power and
- the generator (3) only supplies the additional consuming device (5) with electric power when the power demand of the on-board power supply (19) is met, **characterised in that** the supplying of the additional consuming device (5) and the charging of the vehicle battery (1) are controlled in the following manner:
- when the power demand of the additional consuming device (5) is not completely met,
- when it is established, that a charging current, which flows from the generator (3) into the vehicle battery (1), is greater than a limit value, and
- when the generator power additionally allows the supplying of the additional consuming device (5),
the additional consuming device (5) is supplied with power by the generator (3) and the charging current is adjusted such that it is lower than the maximally possible charging current when the generator power and the power demand of the on-board power supply (19) are the same.

2. A method according to claim 1, wherein the additional consuming device (5) is not supplied with electric power by the generator (3) when the charging current is lower than the limit value.

3. A method according to claim 1 or 2, wherein the charging current is controlled to the limit value, when the additional consuming device (5) is supplied with power by the generator (3).

4. A method according to any one of claims 1 to 3, wherein the limit value of the charging current is changed as a function of at least one variable, more especially as a function of the vehicle battery temperature and/or of the battery charging condition.

5. A method according to any one of claims 1 to 4, wherein a charging condition of the vehicle battery (1) is detected and wherein it is permitted that the charging current falls below the limit value and/or that the vehicle battery (1) is discharged when a supply demand of the additional consumer (5) exists and when the charging condition reaches a high level, more especially when a measurement for the charging condition is greater than or at least equal to a specific minimum value.

6. A device for controlling the charging of a vehicle battery (1), comprising
- a control device (15) for adjusting a charging current, with which a generator (3) charges the vehicle battery (1),
- a detection device (13) for detecting whether the charging current exceeds a limit value and
- a control device (11), which is connected to the detection device (13) and the control device (15) and which has a connection (23) for receiving a demand signal, which signals an electric supply demand of an additional consuming device (5) connected to the generator (3), **characterised in that** in the event of a supply demand of the auxiliary heater, the charging current can be adjusted by the control device (15) such that it is lower than the maximally possible charging current when the generator power and the power demand of other consuming devices (19) connected to the generator (3) are the same.

7. A device according to claim 6, comprising
- a detection device (29) for detecting the charging condition of the vehicle battery (1), which is connected to the vehicle battery (1) and which is also connected to the control device (11),
wherein the control device (11) is configured in such a way that it carries out the control of the charging of the vehicle battery (1) as a function of a detection signal of the detection device (29).
